(19) Europäisches Patentamt
European Patent Office
Office européen des brevets

(11) **EP 4 096 860 B1**

(12) **EUROPÄISCHE PATENTSCHRIFT**

(45) Veröffentlichungstag und Bekanntmachung des Hinweises auf die Patenterteilung:
**18.06.2025  Patentblatt 2025/25**

(21) Anmeldenummer: **21704427.0**

(22) Anmeldetag: **28.01.2021**

(51) Internationale Patentklassifikation (IPC):
**B23K 26/382** (2014.01)   **B23K 26/388** (2014.01)
**B23K 26/0622** (2014.01)   **B23K 26/06** (2014.01)
**B23K 26/082** (2014.01)   **B23K 26/046** (2014.01)

(52) Gemeinsame Patentklassifikation (CPC):
**B23K 26/382; B23K 26/046; B23K 26/0624;
B23K 26/0643; B23K 26/0648; B23K 26/082;
B23K 26/388**

(86) Internationale Anmeldenummer:
**PCT/EP2021/051977**

(87) Internationale Veröffentlichungsnummer:
**WO 2021/152008 (05.08.2021 Gazette 2021/31)**

(54) **ANORDNUNG ZUR MATERIALBEARBEITUNG MIT EINEM LASERSTRAHL, INSBESONDERE ZUM LASERSTRAHL-BOHREN**

ASSEMBLY FOR MATERIAL PROCESSING USING A LASER BEAM, IN PARTICULAR FOR LASER DRILLING

ENSEMBLE DE TRAITEMENT DE MATÉRIAU À L'AIDE D'UN FAISCEAU LASER, NOTAMMENT DESTINÉ AU PERÇAGE PAR LASER

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **31.01.2020  DE 102020201207**

(43) Veröffentlichungstag der Anmeldung:
**07.12.2022  Patentblatt 2022/49**

(73) Patentinhaber: **Fraunhofer-Gesellschaft zur
Förderung
der angewandten Forschung e.V.
80686 München (DE)**

(72) Erfinder:
• **HAASLER, Dennis
52074 Aachen (DE)**
• **FINGER, Johannes
52074 Aachen (DE)**

(74) Vertreter: **Gagel, Roland
Patentanwalt Dr. Roland Gagel
Landsberger Strasse 480a
81241 München (DE)**

(56) Entgegenhaltungen:
EP-A1- 1 082 883          EP-B1- 1 082 883
CN-A- 105 436 703         DE-A1- 10 054 853
DE-A1- 102005 013 949     DE-A1- 102018 208 752
US-A1- 2018 325 727

## Beschreibung

### Technisches Anwendungsgebiet

Die vorliegende Erfindung betrifft eine Anordnung zur Materialbearbeitung mit einem Laserstrahl, insbesondere zum Laserstrahl-Bohren, mit einer dynamischen Ablenkeinrichtung für den Laserstrahl, die zur Ablenkung des Laserstrahls in zwei senkrecht zueinander stehenden Richtungen ausgebildet ist, und einer optischen Anordnung, mit der ein aus der Ablenkeinrichtung austretender Laserstrahl auf eine Bearbeitungsebene fokussierbar ist.

In der Materialbearbeitung mittels kurzen und ultrakurzen Laserpulsen zum Laserstrahl-Schneiden oder Laserstrahl-Bohren können mit typischen Bearbeitungsparametern bei senkrechter Einstrahlung keine steilen Wandwinkel erzielt werden. Der erreichbare Wandwinkel der Abtragsflanken liegt typischerweise im Bereich von maximal 85°. Dies liegt an der Verringerung der Pulsintensität bei Projektion auf die schräge Abtragsflanke, in Folge dessen der Abtrag ab einem Grenzwinkel gestoppt wird. Für viele Anwendungen ist dies allerdings unerwünscht, da bspw. keine senkrechten Schneidflanken oder nur konische Bohrungen möglich sind. Beim Tiefabtrag, Schneiden oder Bohren führt die Begrenzung des Wandwinkels auch zu einer Begrenzung im erzielbaren Aspektverhältnis (Abtragtiefe zu Durchmesser an Oberfläche).

### Stand der Technik

Für das Bohren und Feinschneiden mittels Laserstrahl sind Spezialoptiken verfügbar, die über verschiedene Verfahren den Laserstrahl so anstellen, dass eine zylindrische oder sogar negativ konische Bohrung erzeugt werden kann. Mit diesen Optiken wird der bei senkrechtem Einfall entstehende Wandwinkel durch die Anstellung des Laserstrahls gegenüber dem Werkstück ausgeglichen. Beim Feinschneiden wird während des Bohrens noch eine Relativbewegung zwischen Optik und Werkstück initiiert, wodurch ein Schnitt mit der Breite des Bohrlochdurchmessers erzeugt wird. Die verfügbaren Optiken lassen sich in Abhängigkeit vom Funktionsprinzip zur Anstellung des Laserstrahls in zwei Gruppen unterteilen. Bei der ersten Gruppe erfolgt die Strahlführung mit Hilfe von rotierenden optischen Elementen wie bspw. rotierenden Prismen, Zylinderlinsen oder Keilplatten. Die zweite Gruppe nutzt drehbare Spiegel für die gesamte Strahlführung, d. h. für Versatz, Anstellung und Ablenkung.

Ein klassisches Anwendungsgebiet für das Laserbohren ist die Erzeugung präzisier Mikrobohrungen mit einigen 10 bis 100 μm Durchmesser in dünnen Folien mit Dicken meistens deutlich unter 1 mm. Häufig erfolgt das Bohren über ein Multi-pass Ausschneiden entlang der Bohrlochwand, es findet also kein Vollabtrag statt. Die Bohroptiken sind hierbei häufig auf einen maximalen Bohrlochdurchmesser in der Größenordnung von 1 mm ausgelegt. Für größere Bohrdurchmesser muss die Größe der drehbaren optischen Elemente erhöht werden, wobei die Ablenkgeschwindigkeit dabei nichtlinear reduziert wird.

Die DE 10 2018 208752 A1 (Basis für den Oberbegriff des Anspruchs 1) offenbart eine Anordnung zur Materialbearbeitung mit einem Laserstrahl, die ein Relay-System aus einer ersten und einer zweiten Relay-Optikgruppe aufweist. Im Anschluss an dieses Relay-System ist eine zusätzliche Fokussiereinheit erforderlich, um den Laserstrahl auf die Fokus- bzw. Bearbeitungsebene zu fokussieren.

Aus der DE 100 54 853 A1 sind eine Vorrichtung und ein Verfahren zum Einbringen eines Mikrolochs mit einem Laserstrahl in ein Werkstück bekannt, bei denen der Laserstrahl auf das Werkstuck fokussiert und der Fokus fortlaufend auf einer zur Lochachse konzentrischen Kreisbahn entlangbewegt wird.

Die EP 1 082 883 A1 beschreibt ein Verfahren und eine Vorrichtung zum Bohren von Mikrovias in elektrische Schaltungsträger oder Substrate mit einem Laserstrahl. Bei dem Verfahren werden die Vias mit einer speziellen, bspw. ringförmigen Intensitätsverteilung des Laserstrahls gebohrt, die über Stahlformungselemente erzeugt wird.

Aus der EP 1 188 509 B1 ist eine optische Vorrichtung zum Bohren mittels Laserstrahl bekannt, bei der Anstellwinkel und Auslenkung zum Festlegen eines Trepanierradius getrennt voneinander einstellbar sind. Die Anordnung weist eine Ablenkeinrichtung mit zwei Ablenkspiegeln auf, bei der der optische Abstand wenigstens eines der Ablenkspiegel relativ zur Fokussieroptik parallel zur optischen Hauptachse änderbar ist. Dadurch kann der Laserstrahl in unterschiedlichen Winkeln auf die Fokussieroptik gerichtet werden, wodurch sich entsprechend der Position des Ablenkspiegels unterschiedliche Anstellwinkel ergeben. Die Fokussieroptik ist bei dieser Anordnung durch eine Fokussierlinse gebildet, durch die der Laserstrahl auf die Bearbeitungsebene fokussiert wird. Der Anstellwinkel kann bei dieser Ausgestaltung maximal so groß wie der Auslenkwinkel der Ablenkeinrichtung werden. Große Anstellwinkel lassen sich daher nur für große Konturen realisieren.

### Darstellung der Erfindung

Die Aufgabe der vorliegenden Erfindung besteht darin, eine Anordnung zur Materialbearbeitung mit einem Laserstrahl anzugeben, mit der große und tiefe Bohrungen oder Schnitte mit einem einfachen und damit sehr günstigen und stabilen Aufbau erzeugt werden können und die auch vergleichsweise kleine Bohrungen mit einem großen Anstellwinkel ermöglicht.

Die Aufgabe wird mit der Anordnung gemäß Patentanspruch 1 gelöst. Vorteilhafte Ausgestaltungen der Anordnung sind Gegenstand der abhängigen Patentansprüche oder lassen sich der nachfolgenden Beschreibung sowie dem Ausführungsbeispiel entnehmen.

Die vorgeschlagene Anordnung weist eine dynamische Ablenkeinrichtung für den Laserstrahl, die zur Ablenkung des Laserstrahls in zwei senkrecht zueinander stehenden Richtungen ausgebildet ist, und eine optische Anordnung zwischen der Ablenkeinrichtung und einer Bearbeitungsebene auf, mit der ein aus der Ablenkeinrichtung austretender Laserstrahl auf die Bearbeitungsebene fokussiert wird. Bei der dynamischen Ablenkeinrichtung kann es sich bspw. um einen zweidimensionalen Galvanometerscanner handeln. Auch andere Arten derartiger Ablenkeinrichtungen für Laserstrahlen können selbstverständlich eingesetzt werden. Die optische Anordnung zur Fokussierung des aus der Ablenkeinrichtung austretenden Laserstrahls auf die Bearbeitungsebene weist wenigstens zwei optische Systeme entlang einer optischen Achse der optischen Anordnung auf. Als optisches System wird hierbei eine Anordnung aus einem oder mehreren strahlführenden und/oder strahlformenden optischen Elementen, bspw. einem oder mehreren Linsen, verstanden. Die optische Achse stellt die Symmetrieachse der optischen Anordnung dar, auf der ein eintretender Laserstrahl die optische Anordnung ohne Ablenkung passiert. Bei der vorgeschlagenen Anordnung sind das erste und das zweite optische System so ausgebildet und angeordnet, dass der auf die Bearbeitungsebene fokussierte Laserstrahl zwischen dem ersten und dem zweiten optischen System einen Zwischenfokus bildet und bei einem Eintritt in das optische System unter einem Winkel ($\neq 0°$) zur optischen Achse und beabstandet von dieser zwischen dem zweiten optischen System und der Bearbeitungsebene die optische Achse kreuzt. Der Eintritt in das optische System unter einem Winkel zur optischen Achse und beabstandet von dieser wird durch die dynamische Ablenkeinrichtung verursacht und stellt die gewünschte Betriebsweise der Anordnung zur Erzeugung eines Schnittes oder einer Bohrung eines Werkstückes dar, dessen zu bearbeitender Oberflächenbereich in der Bearbeitungsebene liegt, um auf diese Weise eine Anstellung des Laserstrahls (Winkel > 0° zur Oberflächennormalen) gegenüber dem Oberflächenbereich des Werkstücks zu erreichen. In der vorliegenden Patentanmeldung wird unter dem Eintritt des Lasers oder Laserstrahls unter einem Winkel zur optischen Achse und beabstandet von dieser und unter einer Kreuzung der optischen Achse durch den Laserstrahl in bekannter Weise verstanden, dass die Strahlachse des Laserstrahls unter einem Winkel zur optischen Achse und beabstandet von dieser verläuft bzw. die optische Achse kreuzt.

Bei der vorgeschlagenen Anordnung wird mit der dynamischen Ablenkeinrichtung ein Winkelversatz gegenüber der optischen Achse der optischen Anordnung erzeugt. Der Laser trifft also unter einem Winkel zur optischen Achse und beabstandet zu dieser auf das erste optische System auf und wird durch das erste optische System auf einen Zwischenfokus zwischen erstem und zweitem optischen System fokussiert. Die nach dem Zwischenfokus divergierende Laserstrahlung wird dann durch das zweite optische System auf die Bearbeitungsebene bzw. die Werkstückoberfläche fokussiert. Der Versatz des Laserstrahls zur optischen Achse führt bei der vorgeschlagenen Anordnung zur Anstellung des Laserstrahls mit einem Wendelpunkt oberhalb der Bearbeitungsebene bzw. des Fokus. Auf diese Weise wird in der Bearbeitungsebene bzw. an der Oberfläche des Werkstücks eine für den zu erzielenden steilen Wandwinkel einer Bohrung geeignete Einstrahlrichtung erreicht. Mit dem vorgeschlagenen optischen Aufbau wird damit eine Winkelablenkung des Laserstrahls in Versatz und Anstell- bzw. Einstrahlwinkel aufgeteilt. Der Anstellwinkel ist dabei proportional zum Versatz zur optischen Achse, wobei der Proportionalitätsfaktor vom jeweils gewählten optischen Aufbau bzw. dessen Dimensionen abhängt. Durch den Wendelpunkt oberhalb der Bearbeitungsebene, in dem der Laserstrahl jeweils die optische Achse kreuzt, lassen sich auch kleine Bohrungen mit großem Anstellwinkel realisieren.

Im Gegensatz zur bekannten Nutzung eines Relay-Systems wird in der vorgeschlagenen Anordnung durch die Nutzung von zwei optischen Systemen in definierten Abständen zueinander bereits eine Fokussierung der Laserstrahlung auf die Bearbeitungsebene erreicht, und zwar in der Weise, dass der Laserstrahl bei Eintritt in das erste optische System unter einem Winkel zur optischen Achse und beabstandet von dieser zwischen dem zweiten optischen System und der Bearbeitungsebene die optische Achse kreuzt.

Demgegenüber bildet ein Relay-System lediglich die Ablenkebene auf eine Ebene hinter dem optischen System ab. Eine Fokussierung der Laserstrahlung kann anschließend über eine zusätzliche Fokussieroptik erreicht werden, deren Eintrittspupille in der abgebildeten Ablenkebene positioniert wird. Dies entspricht einem konventionellen Aufbau aus Ablenkeinrichtung und Fokussierlinse, bei der keine Kreuzung der optischen Achse zwischen der Fokussieroptik und der Bearbeitungsebene auftritt. Das Relay-System dient in diesem Fall nur dazu Ablenkeinrichtung und Fokussieroptik räumlich voneinander zu trennen oder im Zwischenfokus räumliche Filter einzusetzen.

Der Durchmesser eines zu erzeugenden Bohrlochs und die Scangeschwindigkeit werden durch die Auslenkung und Drehrate der dynamischen Ablenkrichtung bestimmt. Abhängig von den Abständen zwischen den beiden optischen Systemen, zwischen der Ablenkeinrichtung und dem ersten optischen System und zwischen dem zweiten optischen System und der Bearbeitungs- bzw. Fokusebene und der Wahl der jeweiligen Brennweiten der optischen Systeme werden sowohl der Proportionalitätsfaktor als auch der Fokusdurchmesser eingestellt bzw. festgelegt. Bohrungen können mit der vorgeschlagenen Anordnung sowohl durch Ausschneiden als auch durch Vollabtrag erzeugt werden. So kann die Bohrungskontur durch entsprechende Ansteuerung der dynamischen Ablenkeinrichtung in mehreren Durchläufen mit dem Laserstrahl abgefahren und schichtweise abgetragen werden. Dieses Multi-pass Ausschneiden der Bohrungen entspricht dem typischen Verfahren bei Trepanieroptiken. Auf der anderen Seite kann auch durch das Abscannen der Querschnittsfläche des Bohrlochs über verschiedene Scanbewegungen ein schichtweiser Abtrag der gesamten Bohrungsfläche, also ein Vollabtrag erfolgen. Die Fläche kann hierbei durch entsprechende Ansteuerung der dynamischen Ablenkeinrichtung in unterschiedlicher Weise abgefahren werden, bspw. mittels konzentrischer Kreise oder in Spiralform. Auch andere Scanpfade sind für diesen Vollabtrag möglich.

Mit der vorgeschlagenen Anordnung können positiv konische, zylindrische und auch negativ konische Bohrlöcher von bis zu mehreren mm Durchmessern erzeugt werden. Durch Vollabtrag kann die Fokusebene in die Bohrung hineingeschoben werden, ohne dass die Laserstrahlung hierbei abgeschirmt wird. Außerdem können auch dreidimensional geformte Bohrungen, also von einer Zylinderform abweichende Bohrungen, erzeugt werden. Beispiele sind die Erzeugung von Bohrungstrichtern, die Erzeugung sanduhrförmiger Bohrungen oder die Erzeugung von Bohrungen mit einer Laval-Düsenform. Mit Hilfe einer Relativbewegung des Werkstückes zur vorgeschlagenen Anordnung kann die Anordnung ebenfalls zum Wendelschneiden verwendet werden. Weiterhin kann so auch beim Mikrostrukturieren ein flächiger Abtrag mit senkrechten Abtragflanken oder auch Hinterschnitten erreicht werden.

In einer bevorzugten Ausgestaltung werden das erste optische System und das zweite optische System jeweils aus einer Linse oder einer Linsenanordnung gebildet. Die Abstände der Linsen bzw. optischen Systeme zueinander und auch zur Ablenkeinrichtung und zur Bearbeitungsebene können hierbei fest vorgegeben sein. In einer vorteilhaften Ausgestaltung können einer oder mehrere dieser Abstände auch durch geeignete mechanische Stellelemente bzw. Verstellmechanismen an einem oder beiden optischen Systemen und/oder der Ablenkeinrichtung einstellbar sein.

Zusätzlich zu der Ablenkeinrichtung und der sich an die Ablenkeinrichtung anschließenden optischen Anordnung können auch weitere Komponenten zur Strahlführung und/oder Strahlformung im Strahlengang des Laserstrahls angeordnet sein. So kann die vorgeschlagene Anordnung bspw. im Strahlengang vor der Ablenkeinrichtung ein Teleskop aufweisen, mit dem der Strahldurchmesser des Laserstrahls und damit auch der Fokusdurchmesser in der Bearbeitungsebene angepasst werden kann. Auch eine optische Einrichtung zur Vorfokussierung des Laserstrahls vor der Ablenkeinrichtung kann eingesetzt werden, um hierdurch ebenfalls den Fokusdurchmesser in der Bearbeitungsebene anpassen zu können. Es besteht auch die Möglichkeit durch geeignete drehende optische Elemente, bspw. ein um seine Längsachse rotierendes DOVE-Prisma, den Laserstrahl während der Materialbearbeitung zu drehen, wie dies von Anordnungen zum Wendelbohren mittels Laserstrahlung bekannt ist.

In einer weiteren vorteilhaften Ausgestaltung sind eines oder mehrere geeignete Stellelemente vorgesehen, um die Fokusebene während der Bearbeitung senkrecht zur optischen Achse der optischen Anordnung verschieben oder anpassen zu können. Ein derartiger Z-Shift der Fokusebene kann durch eine Bewegung einer mechanischen z-Achse oder durch Verschiebung der optischen Elemente des ersten und/oder zweiten optischen Systems entlang der optischen Achse der optischen Anordnung erfolgen. Im Strahlengang des Laserstrahls können bei der vorgeschlagenen Anordnung auch Elemente zur Erzeugung einer linearen, zirkularen oder statistisch verteilten Polarisation der Laserstrahlung eingesetzt werden. Weiterhin besteht die Möglichkeit, die Polarisation über geeignete optische Elemente, wie bspw. $\lambda/2$ Platte, $\lambda/4$ Platte, DOVE-Prisma (synchron, asynchron) jeweils mitzudrehen.

Bei der Materialbearbeitung mit der vorgeschlagenen Anordnung lassen sich vorzugsweise ein oder mehrere Verfahrens- und/oder Laserparameter während des Prozesses an den Prozessablauf anpassen. Bei den Laserparametern betrifft dies die Pulsenergie, die Pulsdauer sowie die Repetitionsrate, bei den Verfahrensparametern die Scangeometrie, die Scangeschwindigkeit, die Geschwindigkeit des Z-Shiftes, den Verlauf des Z-Shiftes sowie Wartezeiten zwischen einzelnen Bearbeitungsphasen. Zusätzlich können in bekannter Weise Prozessgase wie Luft, Inertgas oder Aktivgas während der Bearbeitung eingesetzt werden, bspw. durch Nutzung eines Crossjet oder einer koaxialen Düse, um dadurch einen verbesserten Abtransport der Ablationspartikel aus dem Wechselwirkungsbereich mit der Laserstrahlung zu erreichen.

Mit dem vorgeschlagenen Verfahren lassen sich große und tiefe Bohrungen oder Schnitte mit einem sehr günstigen und stabilen Aufbau realisieren. Die vorgeschlagene Anordnung kann nachträglich in viele verfügbare Bearbeitungs- bzw. Strukturierungsanlagen integriert werden. Die Anordnung ermöglicht einen Vollabtrag des Bohrlochquerschnitts oder ein Ausschneiden mittels Spiral- oder Kreisfahrten mit jeweils angepasstem Anstellwinkel. Im einfachsten Fall verfügt die optische Anordnung nur über zwei Linsen, so dass nur geringe Verluste im optischen Strahlengang auftreten. Da in der optischen Anordnung keine sich bewegenden Komponenten angeordnet sind, weist die vorgeschlagene Anordnung einen einfachen, stabilen und günstigen Aufbau auf. Die Größe der mit der Anordnung herstellbaren Bohrungen ist nur durch den Durchmesser der beiden optischen Systeme begrenzt. Beim Wendelschneiden sind auch größere Schnitttiefen durch eine größere Schnittfuge möglich. Die vorgeschlagene Anordnung lässt sich bspw. zum Bohren im Turbomaschinenbau, der Elektronikfertigung oder der Halbleitertechnik, zum Wendelschneiden, bspw. in der Präzisionsmechanik oder Halbleitertechnik oder auch im Werkzeugbau und Flugzeugbau einsetzen.

**Kurze Beschreibung der Zeichnungen**

Die vorgeschlagene Anordnung wird nachfolgend anhand eines Ausführungsbeispiels in Verbindung mit der Zeichnung nochmals näher erläutert. Hierbei zeigt:

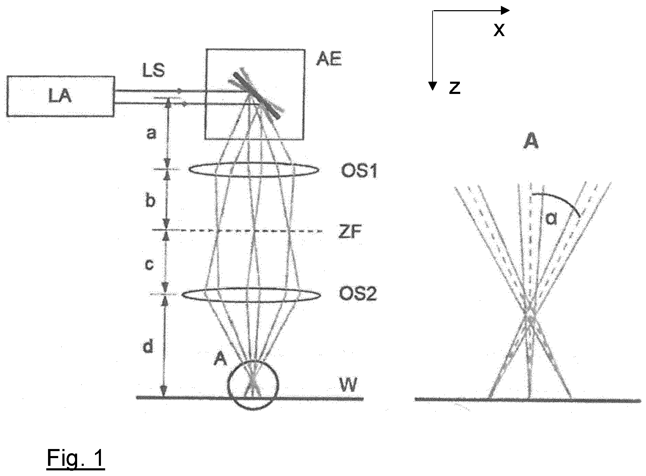

Fig. 1 ein Beispiel für eine Ausgestaltung der vorgeschlagenen Anordnung.

**Wege zur Ausführung der Erfindung**

Bei der vorgeschlagenen Anordnung wird ein Laserstrahl mittels einer Ablenkeinrichtung über eine optische Anordnung auf eine Werkstückoberfläche fokussiert, um von dieser Werkstückoberfläche Material abzutragen, insbesondere um Bohrlöcher oder Schnitte im Werkstück zu erzeugen. Figur 1 zeigt in schematischer Darstellung einen beispielhaften Aufbau der vorgeschlagenen Anordnung. Bei dieser Darstellung wird kollimierte Laserstrahlung LS aus einer Laserstrahlquelle LA von der Ablenkeinheit AE in zwei senkrecht zueinander verlaufenden Richtungen (X- und Y-Richtung) abgelenkt. Bei dieser Ablenkeinheit AE kann es sich bspw. um einen zweidimensionalen Galvanometerscanner handeln. In der Figur sind hierbei drei Stellungen eines der Spiegel der Ablenkeinheit AE mit dem daraus resultierenden Strahlverlauf der Laserstrahlung zu erkennen. Die Laserstrahlung trifft in zwei der dargestellten drei Stellungen unter einem Winkel zur optischen Achse auf das erste optische System OS1, im vorliegenden Beispiel eine Fokussierlinse. In der mittleren Stellung des dargestellten Spiegels der Ablenkeinheit AE propagiert die Laserstrahlung entlang der optischen Achse durch das erste optische System OS1. Im Abstand b der Brennweite des ersten optischen Systems OS1 entsteht ein Zwischenfokus ZF. Anschließend wird die divergierende Laserstrahlung durch das zweite optische System OS2 auf das Werkstück W fokussiert. Auch das zweite optische System OS2 wird in diesem Beispiel lediglich durch eine Fokussierlinse gebildet. Die Abstände a, b, c und d zwischen der Ablenkeinheit AE und dem ersten optischen System OS1, zwischen dem ersten optischen System OS1 und dem Zwischenfokus ZF, zwischen dem Zwischenfokus ZF und dem zweiten optischen System OS2 und zwischen dem zweiten optischen System OS2 und der Werkstückoberfläche W, die in diesem Beispiel der Bearbeitungsebene entspricht, werden so gewählt, dass der Laserstrahl vor Auftreffen auf die Werkstückoberfläche W die optische Achse kreuzt. Dies ist in der vergrößerten Darstellung des Abschnittes A im rechten Teil der Figur vergrößert dargestellt. Der Versatz des Laserstrahls von der Mittellinie bzw. optischen Achse, der während des Durchlaufs durch das erste optische System OS1 bei entsprechender Spiegelstellung entstanden ist, führt zur Anstellung des Laserstrahls mit einem Winkel α und einem Wendelpunkt oberhalb der Fokusebene. Die beiden optischen Systeme OS1, OS2 bilden einen virtuellen Punkt samt virtueller Auslenkung oberhalb der Ablenkeinheit AE ab und führen so zu einer Anstellung in eine für die Konizität der gewünschten Bohrung vorteilhaften Richtung.

Durch entsprechende dynamische Ablenkung des Laserstrahls LS mit der Ablenkeinheit AE kann so die gewünschte Bohrung erzeugt werden. Der Einstrahlwinkel auf die Werkstückoberfläche ist dabei jeweils proportional zum Versatz des Laserstrahls zwischen den beiden optischen Systemen OS1, OS2 zur Mittellinie bzw. optischen Achse. Durch Änderung der Abstände a, b, c und d und geeignete Wahl der Brennweiten der optischen Systeme OS1, OS2 können sowohl der Proportionalitätsfaktor als auch der Fokusdurchmesser eingestellt werden.

Mit der folgenden beispielhaften Dimensionierung der Anordnung lässt sich bspw. eine Bohrung mit einem Durchmesser von 500 μm in einem Werkstück aus 5 mm dicker Nickelbasislegierung erzeugen. Dabei wird eine Pulsenergie von ~1 mJ bei einem Fokusdurchmesser von 40 μm und einer Pulsdauer < 20 ps verwendet und es findet ein Vollabtrag durch Spiralen statt. Die in Figur 1 dargestellten Parameter werden dabei wie folgt gewählt:

$$a = 50 \ mm$$

$$b = 500 \ mm$$

$$c = 500 \ mm$$

$$d = 80 \ mm$$

Brennweite der Linse OS1: 500 mm
Brennweite der Linse OS2: 70 mm

Bezugszeichenliste

AE Ablenkeinheit
LA Laserstrahlquelle
LS Laserstrahl
OS1 erstes optisches System
OS2 zweites optisches System
W Werkstückoberfläche
ZF Zwischenfokus
a - d Abstände

**Patentansprüche**

1. Anordnung zur Materialbearbeitung mit einem Laserstrahl, insbesondere zum Laserstrahl-Bohren, mit

- einer dynamischen Ablenkeinrichtung (AE) für den Laserstrahl (LS), die zur Ablenkung des Laserstrahls (LS) in zwei senkrecht zueinander stehenden Richtungen ausgebildet ist, und

- einer optischen Anordnung, mit der ein aus der Ablenkeinrichtung (AE) austretender Laserstrahl auf eine Bearbeitungsebene (W) fokussiert wird,

- wobei die optische Anordnung entlang einer optischen Achse der optischen Anordnung ein erstes optisches System (OS1) und ein zweites optisches System (OS2) aufweist, die so ausgebildet und angeordnet sind, dass der Laserstrahl (LS) zwischen dem ersten und dem zweiten optischen System (OS1, OS2) einen Zwischenfokus (ZF) bildet, **dadurch gekennzeichnet, dass** der Laserstrahl bei Eintritt in das erste optische System (OS1) unter einem Winkel zur optischen Achse und beabstandet zu dieser zwischen dem zweiten optischen System (OS2) und der Bearbeitungsebene (W) die optische Achse kreuzt.

2. Anordnung nach Anspruch 1,
**dadurch gekennzeichnet,**
**dass** an einem der beiden optischen Systeme (OS1, OS2) oder an beiden optischen Systemen (OS1, OS2) eines oder mehrere Stellelemente angebracht sind, mit dem oder denen ein Abstand zwischen den beiden optischen Systemen (OS1, OS2) und/oder ein Abstand des ersten optischen Systems (OS1) zur Ablenkeinheit (AE) und/oder ein Abstand des zweiten optischen Systems (OS2) zur Bearbeitungsebene (W) einstell- oder veränderbar ist.

3. Anordnung nach Anspruch 1 oder 2,
**dadurch gekennzeichnet,**
**dass** im Strahlengang des Laserstrahls (LS) vor der Ablenkeinrichtung (AE) ein Teleskop angeordnet ist, mit dem ein Strahldurchmesser des Laserstrahls (LS) verändert werden kann.

4. Anordnung nach Anspruch 1 oder 2,
**dadurch gekennzeichnet,**
**dass** im Strahlengang des Laserstrahls (LS) vor der optischen Anordnung oder der Ablenkeinrichtung (AE) eine optische Einrichtung zur Vorfokussierung des Laserstrahls (LS) angeordnet ist.

5. Anordnung nach Anspruch 4,
**dadurch gekennzeichnet,**
**dass** die optische Einrichtung zur Vorfokussierung so ausgebildet ist, dass sie eine variable Vorfokussierung des Laserstrahls (LS) ermöglicht.

6. Anordnung nach einem der Ansprüche 1 bis 5,
**dadurch gekennzeichnet,**
**dass** die optische Anordnung eines oder mehrere Stellelemente aufweist, mit dem oder denen eine Fokusebene des Laserstrahls (LS) während der Materialbearbeitung entlang der optischen Achse der optischen Anordnung verschoben werden kann.

7. Anordnung nach einer der Ansprüche 1 bis 6,
**dadurch gekennzeichnet,**
**dass** die optische Anordnung mindestens ein Element zur Beeinflussung der Polarisation aufweist, wodurch eine für die Materialbearbeitung vorteilhafte Polarisation eingestellt werden kann.

8. Verwendung der Anordnung nach einem oder mehreren der vorangehenden Ansprüche zur Erzeugung eines Bohrlochs durch schichtweisen Vollabtrag, bei dem ein Bohrlochquerschnitt jeweils vollständig mit dem Laserstrahl abgefahren wird.

9. Verwendung der Anordnung nach einem oder mehreren der vorangehenden Ansprüche zur Erzeugung eines Bohrlochs durch Ausschneiden einer Bohrlochkontur mittels Spiral- oder Kreisfahrten mit dem Laserstrahl.

**Claims**

1. Assembly for material processing using a laser beam, in particular for laser drilling, with

- a dynamic deflection device (AE) for the laser beam (LS), which is designed to deflect the laser beam (LS) into two directions extending perpendicularly to each other, and
- an optical assembly, with which a laser beam exiting the deflection device (AE) is focussed onto a processing plane (W),
- wherein the optical assembly includes a first optical system (OS1) and a second optical system (OS2) along an optical axis of the optical assembly, which are designed and arranged such that the laser beam (LS) forms a intermediate focus (ZF) between the first and second optical systems (OS1, OS2), **characterized in that** the laser beam when entering the first optical system (OS1) at an angle to the optical axis and at a distance therefrom intersects the optical axis between the second optical system (OS2) and the processing plane (W).

2. Assembly according to Claim 1,
**characterized in that**
one or more positioning elements are attached to one of the two optical systems (OS1, OS2) or to both optical systems (OS1, OS2), with which a spacing between the two optical systems (OS1, OS2) and/or a spacing between the first optical system (OS1) and the deflection unit (AE), and/or a spacing between the second optical system (OS2) and the processing plane (W) can be set or changed.

3. Assembly according to Claim 1 or 2, **characterized in that** a telescope is arranged in front of the deflection device (AE) in the beam path of the laser beam (LS), with which a beam diameter of the laser beam (LS) can be changed.

4. Assembly according to Claim 1 or 2, **characterized in that** an optical device for pre-focussing the laser beam (LS) is arranged in front of the optical assembly or the deflection device (AE) in the beam path of the laser beam (LS).

5. Assembly according to Claim 4, **characterized in that** the optical device for pre-focussing is designed in such manner that it enables a variable pre-focussing of the laser beam (LS).

6. Assembly according to any one of Claims 1 to 5, **characterized in that** the optical assembly includes one or more positioning elements, with which a focussing plane of the laser beam (LS) can be shifted along the optical axis of the optical assembly during the material processing.

7. Assembly according to any one of Claims 1 to 6, **characterized in that** the optical assembly includes at least one element for influencing the polarisation, by which a polarisation advantageous for the material processing can be set.

8. Use of the assembly according to one or more of the preceding claims for creating a borehole by full ablation in layers, in which a laser beam passes over the entire borehole cross section in each case.

9. Use of the assembly according to one or more of the preceding claims for creating a borehole by cutting out a borehole contour by means of spiral or circular traverses with the laser beam.

**Revendications**

1. Agencement pour le traitement de matériaux avec un faisceau laser, notamment pour le perçage par faisceau laser, comportant

   - un dispositif de déviation dynamique (AE) pour le faisceau laser (LS), qui est conçu pour dévier le faisceau laser (LS) dans deux directions mutuellement perpendiculaires, et
   - un agencement optique, avec lequel un faisceau laser sortant du dispositif de déviation (AE) est focalisé sur un plan de traitement (W),
   - dans lequel l'agencement optique présente le long d'un axe optique de l'agencement optique un premier système optique (OS1) et un deuxième système optique (OS2), qui sont conçus et disposés de telle sorte que le faisceau laser (LS) forme entre le premier et le deuxième système optique (OS1, OS2) un foyer intermédiaire (ZF), **caractérisé en ce que** le faisceau laser croise l'axe optique lors de l'entrée dans le premier système optique (OS1) sous un angle par rapport à l'axe optique et espacé de celui-ci entre le deuxième système optique (OS2) et le plan de traitement (W).

2. Agencement selon la revendication 1, **caractérisé en ce qu'**un ou plusieurs éléments de réglage sont fixés à un des deux systèmes optiques (OS1, OS2) ou aux deux systèmes optiques (OS1, OS2), avec lequel ou lesquels une distance entre les deux systèmes optiques (OS1, OS2) et/ou une distance du premier système optique (OS1) à l'unité de déviation (AE) et/ou une distance du deuxième système optique (OS2) au plan de traitement (W) peut être réglée ou modifiée.

3. Dispositif selon la revendication 1 ou 2, **caractérisé en ce que** dans le trajet du faisceau laser (LS) devant le dispositif de déviation (AE) un télescope est disposé, avec lequel un diamètre de faisceau du faisceau laser (LS) peut être modifié.

4. Dispositif selon la revendication 1 ou 2, **caractérisé en ce qu'**un dispositif optique de pré-focalisation du faisceau laser (LS) est disposé dans le trajet du faisceau laser (LS) devant l'agencement optique ou le dispositif de déviation (AE).

5. Dispositif selon la revendication 4, **caractérisé en ce que** le dispositif optique de pré-focalisation est conçu de telle manière qu'il permettre une pré-focalisation variable du faisceau laser (LS).

6. Dispositif selon une des revendications 1 à 5, **caractérisé en ce que** la disposition optique présente un ou plusieurs éléments de réglage, avec lequel ou lesquels un plan focal du faisceau laser (LS) peut être déplacé pendant le traitement du matériau le long de l'axe optique de l'agencement optique.

7. Dispositif selon une des revendications 1 à 6, **caractérisé en ce que** l'agencement optique présente au moins un élément pour influencer la polarisation, ce qui permet de régler une polarisation avantageuse pour le traitement du matériau.

8. Utilisation du dispositif selon une ou plusieurs des revendications précédentes pour la réalisation d'un trou de forage par enlèvement complet couche par couche, dans lequel une section transversale du trou de forage est entièrement traversée par le faisceau laser.

9. Utilisation du dispositif selon une ou plusieurs des revendications précédentes pour réaliser un trou de forage en découpant un contour de trou de forage au moyen de mouvements en spirale ou circulaires avec le faisceau laser.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018208752 A1
- DE 10054853 A1
- EP 1082883 A1
- EP 1188509 B1